# EUROPÄISCHE PATENTSCHRIFT

(11) **EP 1 357 273 B1**
(45) Veröffentlichungstag und Bekanntmachung des Hinweises auf die Patenterteilung: **26.03.2008**
(21) Anmeldenummer: 03008616.9
(22) Anmeldetag: 15.04.2003
(51) Int. Cl.: F02B 19/10, F02D 19/02

(54) **Selbstzündende gemischverdichtende Brennkraftmaschine und Verfahren zu ihrem Betrieb**
Self-ignited mixture compressing internal combustion engine and method of operation
Moteur à combustion interne à compression de mélange à auto-allumage et méthode pour son opération

(30) Priorität: 23.04.2002 DE 10217996
(43) Veröffentlichungstag der Anmeldung: 29.10.2003
(73) Patentinhaber: MAN B & W Diesel AG, 86224 Augsburg (DE)
(72) Erfinder: Lausch, Wolfram, Prof. Dr., 86150 Augsburg (DE); Glauber, Robert, Dr., 86316 Friedberg (DE); Heider, Günther, Dr., 86845 Grossaitingen (DE); Rieck, Kai, 86368 Gersthofen (DE)
(74) Vertreter: Grünberger, Christian Thomas

(56) Entgegenhaltungen:
- WO-A-91/12418
- DE-A1- 4 419 429
- US-A- 5 144 924
- US-A- 5 293 851
- US-B1- 6 298 825

## Beschreibung

Die Erfindung betrifft eine selbstzündende gemischverdichtende Brennkraftmaschine gemäß dem Oberbegriff des Patentanspruchs 1 sowie ein Verfahren zu ihrem Betrieb gemäß Patentanspruch 6.

Aus der DE 44 19 429 ist eine derartige Brennkraftmaschine bekannt, welche in einem Hauptbrennraum ein gasförmiges Brennstoff/Luftgemisch verbrennt, wobei dieses aus einer Verbrennungs-Vorkammer heraus gezündet wird. Die Vorkammer ist an eine Hochdruck-Brenngasleitung angeschlossen und bildet ein brennstoffreiches Gemisch, welches sich selbst entzündet und durch die weitere Druckerhöhung in den Hauptbrennraum überströmt, wo es vollständig verbrennt und dabei das verdichtete Brennstoff/Luftgemisch entzündet.

Aufgabe der Erfindung ist es, den Anteil des Brenngases, der hochverdichtet in die Vorkammer eingeblasen wird, gegenüber dem Stand der Technik deutlich zu verringern.
Diese Aufgabe wird erfindungsgemäß durch die neuen konstruktiven Maßnahmen des Patentanspruchs 1 gelöst und insbesondere durch das Verfahren gemäß dem Anspruch 6 realisiert.

Durch ein thermisches Schutzschild können bei einer erfindungsgemäßen Brennkraftmaschine in vorteilhafter Weise die Betriebstemperaturen des Gaseinblaseventils reduziert werden und lange Lebensdauern erzielt werden.
Eine vorteilhafte spezielle Ummantelung des Glühkerzenstifts sorgt für eine sichere Entflammung des Vorkammergemisches und erhöht die Glühkerzenlebensdauer.

Die selbstreinigende Wirkung einer vorzugsweise eingesetzten Drosselzapfendüse führt in vorteilhafter Weise zu über der Betriebszeit konstanten Bedingungen bei der Gaseinblasung in die Vorkammer.
Durch das erfindungsgemäß vorbestimmte Verhältnis von Vorkammervolumen zu Ausblasequerschnitt zum Hauptbrennraum treten geringe Zyklenschwankungen auf, so daß sich ein vorteilhaft stabiler Betrieb der Brennkraftmaschine einstellt.
Durch die erfindungsgemäße Anordnung von einfachen Bauteilen läßt sich das vorteilhafte Gaseinblaseventil besonders günstig realisieren.
Der bei vorzugsweise zwischen etwa 0,2 und 0,3 % eingestellte Vorkammergasanteil führt zu optimalen Betriebswerten und -verhalten.
Die erfindungsgemäße Reduzierung der Vorkammergasmenge und der daraus resultierenden verminderten Verdichterarbeit führt zu einer vorteilhaften Erhöhung des effektiven Wirkungsgrades der Brennkraftmaschine.
Weitere Merkmale und Vorteile ergeben sich aus den Unteransprüchen in Verbindung mit der Beschreibung.

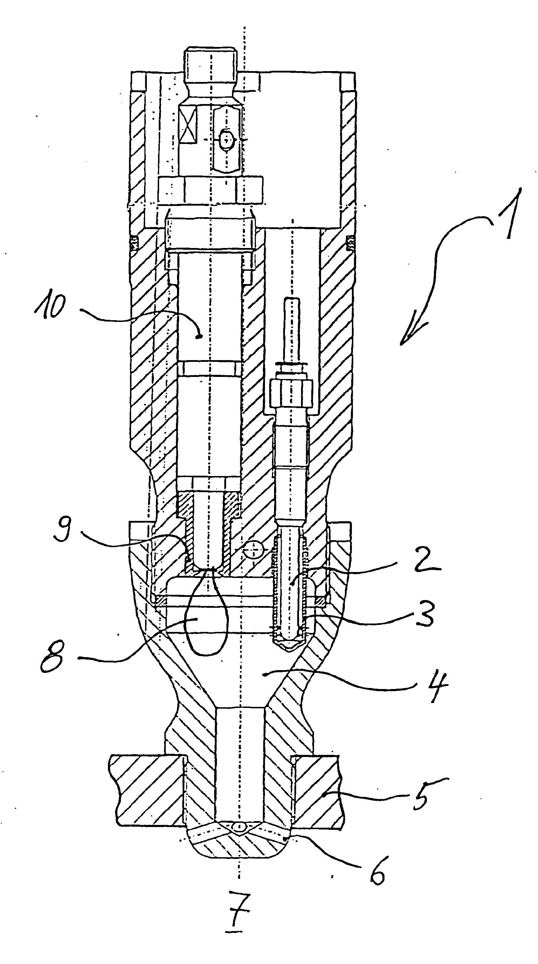

Nachfolgend wird die Erfindung anhand eines Ausführungsbeispiels näher erläutert. In der zugehörigen schematischen Zeichnung ist eine erfindungsgemäß ausgeführte Brennkraftmaschine auschnittsweise dargestellt. Am Zylinder und Brennraum sind die üblichen Einrichtungen für den Ladungswechsel sowie ein Kolben vorgesehen, welche in der Figur nicht gezeigt werden. Abgebrochen dargestellt ist der Zylinderkopf 5 in welchen ein Einsatz 1 montiert ist, beispielsweise eingeschraubt. In dem Einsatz 1 ist eine Vorkammer 4 gebildet, welche durch vorzugsweise mehrere Übertrittsöffnungen 6 mit dem Hauptbrennraum 7 verbunden ist.
Durch eine Düse, vorzugsweise eine Drosselzapfendüse 10, wird unter hohem Druck Brenngas in die Vorkammer 4 eingebracht, welches einen Strahl 8 bildet. Durch die Strahlcharakteristik kann sich das Brenngas sehr intensiv mit dem in der Vorkammer 4 vorhandenen Brennstoff/Luftgemisch vermischen, bevor es sich an der heißen Oberfläche des Glühkerzenstifts bzw. selbst entzündet. Der daraus resultierende schnelle Druckanstieg in der Vorkammer 4 sichert eine stabile Zündung des magereren Brenngas/Luft-Gemisches im Hauptbrennraum 7. Die vorzugsweise eingesetzte Drosselzapfendüse 10 wirkt neben diesen Vorteilen auch noch selbstreinigend, wodurch Koksablagerungen an ihrem Ausblasequerschnitt verhindert werden.
Durch die geringe Innenkühlung, aufgrund der Verwendung von Gas als Brennstoff mit geringer Wärmekapazität und schlechtem Wärmeübergang gegenüber flüssigen Brennstoffen sowie der geringen durchgespülten Kraftstoffmengen ist die Drosselzapfendüse 10 einer hohen thermischen Belastung ausgesetzt. Diese Belastung kann reduziert werden, indem ein Schutzschild 9 vorgesehen wird, welches die Drosselzapfendüse 10 gegenüber der Vorkammer 4 abschirmt, so daß der Wärmeeintrag aus der Vorkammer 4 verringert wird. Das Schutzschild 9 besteht vorzugsweise aus einem gut wärmeleitenden Werkstoff, wie beispielsweise Kupfer, und wird scheiben- oder hülsenförmig gestaltet. Das in der Figur beispielhaft gezeigte hülsenförmige Schutzschild 9 umschließt die Drosselzapfendüse 10 im vorderen Bereich und läßt im Ausblasebereich eine Durchtrittsöffnung für das Brenngas frei. Diese Durchtrittsöffnung kann mit einer kegeligen Ansenkung versehen werden, um Behinderungen des Strahles 8 zu vermeiden. Ein scheibenförmiges Schutzschild 9 wäre lediglich im Bereich der Ausblaseöffnung der Düse angeordnet, ohne den vorderen Bereich zu ummanteln.
Der Zapfen der Drosselzapfendüse 10 wird statt einer Schließfeder durch ein Hydrauliksystem gesteuert, dessen Standdruck größer als der konstante Gaseinblasedruck ist. Dadurch wird sichergestellt, daß kein Brenngas entweichen kann. Das Spiel des Zapfens in seiner Führung ist so auf die Viskosität des Hydrauliköls abgestimmt, daß es den Ventilsitz schmiert, wobei die Leckrate so eingegrenzt ist, daß keine oder nur geringste Mengen des Hydrauliköls an der Verbrennung teilnehmen. Damit werden in vorteilhafter Weise die Lebensdauer der Teile verlängert und verhindert, daß Verkokungen auftreten, welche die Stabilität der Verbrennung sowie die Abgasemissionen negativ beeinflussen können. Die Steuerung des Drosselzapfenventils 10 erfolgt vorzugsweise mit einem Magnetventil, durch welches der Hydraulikdruck weg- oder aufgeschaltet werden kann. Der Öffnungsbeginn und die Öffnungsdauer lassen sich so vorteilhaft einfach frei vorgeben bzw. einstellen.
Für die Zündung des Brenngas/Luftgemisches in der Vorkammer 4 kann eine Glühkerze 2 vorgesehen werden, welche mit ihrem Glühstift in die Vorkammer 4 hineinragt. Durch eine vorteilhafte Schirmung 3, welche den Glühstift der Glühkerze umschließt und mit entsprechenden Öffnungen bzw. Bohrungen versehen ist, kann während des Spülens der Vorkammer 4 die Wärmeabfuhr durch erzwungene Konvektion reduziert und die Oberflächentemperatur des Glühstiftes erhöht werden. Dadurch wird bei Startvorgängen und bei niedriger Teillast gewährleistet, daß die Selbstzündtemperatur des Gemisches in der Vorkammer 4 immer sicher erreicht wird sowie die Heizleistung der Glühkerze 2 bei höheren Lasten bis auf Null reduziert werden kann. Durch diese Maßnahme kann die Lebensdauer der Glühkerze deutlich gesteigert werden, da ihre Heizwendel nicht ständig thermisch belastet wird. Durch geschickt angeordnete Öffnungen an der Schirmung 3 kann erreicht werden, daß zündfähiges Gemisch zwischen die Schirmung 3 und den Glühstift gelangt. Die Schirmung 3 der Glühkerze 2 muß aus einem hochtemperaturbeständigen Werkstoff hergestellt werden und kann zur weiteren Optimierung katalytisch beschichtet sein.
Nach der Selbstzündung des Brenngases steigt der Druck in der Vorkammer schnell an, so daß das teilweise verbrannte Gas durch die Übertrittsöffnungen 6 in den Hauptbrennraum 7 übergeblasen wird und dort das Brenngas/Luftgemisch entzündet. Durch ein vorbestimmtes Verhältnis des Volumens der Vorkammer 4 zum Querschnitt der Übertrittsöffnungen 6 kann ein optimaler Druckanstieg in der Vorkammer 4 mit nachfolgender intensiver Ausblasung in den Hauptbrennraum 7 erreicht werden, wodurch eine vorteilhafte stabile Entflammung des Brenngas/Luft-Gemischs im Hauptbrennraum 7 erreicht wird. Aufgrund der sicheren und stabilen Entflammung im Hauptbrennraum 7 treten bei dem Brennverfahren in einer erfindungsgemäß ausgestatteten Brennkraftmaschine nur geringe Zyklenschwankungen auf. Vorzugsweise liegt das Verhältnis von Vorkammervolumen zum Ausblasequerschnitt der Übertrittsbohrungen 6 zwischen 50 und 80 cm³/cm² (Kubikzentimeter/Quadratzentimeter).

Die erfindungsgemäße Brennkraftmaschine kann mit einem Verfahren betrieben werden, durch welches weniger als 0,5% - vorzugsweise zwischen 0,2 bis 0,3 % - des gesamten zum Betrieb verwendeten gasförmigen Brennstoffes hochverdichtet in die Vorkammer eingeblasen wird. Der gasförmige Brennstoff wird dabei mit einem Druck in die Vorkammer eingeblasen, der über dem Verdichtungsenddruck des angesaugten Brennstoff/Luftgemischs im Hauptbrennraum liegt. In der Vorkammer bildet der Brennstoff ein brennstoffreiches Brennstoff/Luftgemisch, welches sich entzündet und in den Hauptbrennraum überströmt, wo es das verdichtete magerere Brennstoff/Luftgemisch zündet.

### Bezugszeichenliste

- 1: Einsatz
- 2: Glühkerze
- 3: Schirmung
- 4: Vorkammer
- 5: Zylinderkopf
- 6: Überblaseöffnung/Übertrittsöffnung
- 7: Hauptbrennraum
- 8: Strahl
- 9: Schutzschild
- 10: Düse / Drosselzapfendüse

## Patentansprüche

1. Selbstzündende gemischverdichtende Brennkraftmaschine für gasförmigen Brennstoff mit einer vom Hauptbrennraum (7) abgeteilten Vorkammer (4), welche durch mindestens eine Öffnung (6) miteinander verbunden sind, wobei der Hauptbrennraum (7) mit einer Niederdruck-Brenngas-Leitung und die Vorkammer (4) mit einer Hochdruck-Brenngas-Leitung verbunden sind und das Brenngas/Luftgemisch aus der Vorkammer (4) zum Zünden eines verdichteten Brenngas/Luftgemisches in den Hauptbrennraum (7) überblasbar ist, **dadurch gekennzeichnet, daß** die Vorkammer (4) in einem in den Zylinderkopf (5) montierbaren Einsatz (1) gebildet wird, in welchem eine an die Hochdruck-Brenngas-Leitung angeschlossene Düse (10) angeordnet ist, durch welche das Brenngas in die Vorkammer (4) einblasbar ist und an dem Einsatz (1) mindestens eine Überblaseöffnung (6) vorgesehen ist, welche die Vorkammer (4) mit dem Hauptbrennraum (7) verbindet.

2. Selbstzündende gemischverdichtende Brennkraftmaschine nach Anspruch 1, **dadurch gekennzeichnet, daß** als Düse (10) eine Drosselzapfendüse vorgesehen ist und an der Düse (10) mindestens im an die Vorkammer (4) angrenzenden Bereich ein hülsen- oder scheibenförmiges Schutzschild (9) aus einem gut wärmeleitenden Werkstoff, wie beispielsweise Kupfer, vorgesehen ist.

3. Selbstzündende gemischverdichtende Brennkraftmaschine nach einem der vorangehenden Ansprüche, **dadurch gekennzeichnet, daß** an dem Einsatz (1) eine in die Vorkammer (4) hineinreichende Glühkerze (2) vorgesehen ist, welche mindestens in Teilbereichen von einer hochtemperaturbeständigen Schirmung (3) umgeben ist.

4. Selbstzündende gemischverdichtende Brennkraftmaschine nach einem der vorangehenden Ansprüche, **dadurch gekennzeichnet, daß** die Drosselzapfendüse (10) mit einem magnetventilgesteuerten Hydrauliksystem versehen ist, durch welches der Öffnungsbeginn und die Öffnungsdauer frei wählbar sind und der Standdruck des Hydrauliksystems größer als der Einblasedruck des Brenngases ist sowie die Viskosität des Hydrauliköls so auf das Spiel des Zapfens in seiner Führung abgestimmt ist, daß der Zapfensitz geschmiert wird, so daß keine oder höchstens vernachlässigbar geringe Mengen des Hydrauliköls an der Verbrennung teilnehmen.

5. Selbstzündende gemischverdichtende Brennkraftmaschine nach einem der vorangehenden Ansprüche, **dadurch gekennzeichnet, daß** das Verhältnis des Volumens der Vorkammer (4) zum gesamten Querschnitt der Überblaseöffnungen (6) zwischen 50 und 80 cm³/cm² liegt.

6. Verfahren zum Betreiben einer Brennkraftmaschine, insbesondere nach einem der vorangehenden Ansprüche, mit einem gasförmigen Brennstoff, welcher einer Vorkammer zugeführt wird und dort ein brennstoffreiches Brennstoff/Luftgemisch bildet und mit einem Hauptbrennraum in welchen ein Brennstoff/Luftgemisch angesaugt wird, wobei der gasförmige Brennstoff mit einem Druck in die Vorkammer eingeblasen wird, der über dem Verdichtungsenddruck im Hauptbrennraum liegt, **dadurch gekennzeichnet, daß** weniger als 0,5% des gesamten zum Betrieb verwendeten gasförmigen Brennstoffes hochverdichtet in die Vorkammer eingeblasen wird.

## Claims

1. Self-igniting, mixture-compressing internal-combustion engine for gaseous fuel, with a prechamber (4) separated from the main combustion chamber (7), which chambers are connected to one another by at least one aperture (6), the main combustion chamber (7) being connected to a low-pressure fuel-gas line and the prechamber (4) to a high-pressure fuel-gas line and the fuel-gas/air mixture being able to be blown from the prechamber (4) into the main combustion chamber (7) in order to ignite a compressed fuel-gas/air mixture, **characterised in that** the prechamber (4) is formed in an insert (1) which can be mounted in the cylinder head (5) and in which there is arranged a nozzle (10) connected to the high-pressure fuel-gas line, through which nozzle (10) the fuel gas can be injected into the prechamber (4), and at least one transfer aperture (6) which connects the prechamber (4) to the main combustion chamber (7) is provided in the insert (1).

2. Self-igniting, mixture-compressing internal-combustion engine according to Claim 1, **characterised in that** a throttle-pin nozzle is provided as the nozzle (10) and a sleeve-shaped or plate-shaped protective shield (9) made of a material with good thermal conduction, such as copper, is provided on the nozzle (10) at least in the region adjoining the prechamber (4).

3. Self-igniting, mixture-compressing internal-combustion engine according to either of the preceding claims, **characterised in that** a glow plug (2) extending into the prechamber (4) is provided on the insert (1), which glow plug (2) is surrounded at least in partial regions by a high-temperature-resistant screen (3).

4. Self-igniting, mixture-compressing internal-combustion engine according to any one of the preceding claims, **characterised in that** the throttle-pin nozzle (10) is provided with a solenoid-valve-controlled hydraulic system by means of which the start of opening and the duration of opening are freely selectable and the static pressure of the hydraulic system is higher than the injection pressure of the fuel gas, and the viscosity of the hydraulic oil is so coordinated with the play of the pin in its guide that the pin seat is lubricated, so that no hydraulic oil, or at most negligibly small quantities thereof, participate in combustion.

5. Self-igniting, mixture-compressing internal-combustion engine according to any one of the preceding claims, **characterised in that** the ratio of the volume of the prechamber (4) to the total cross section of the transfer apertures (6) is from 50 to 80 cm³/cm².

6. Method for operating an internal-combustion engine, in particular according to any one of the preceding claims, with a gaseous fuel which is supplied to a prechamber and forms therein a fuel-rich fuel/air mixture, and with a main combustion chamber into which a fuel/air mixture is aspirated, the gaseous fuel being injected into the prechamber under a pressure which is higher than the final compression pressure in the main combustion chamber, **characterised in that** less than 0.5% of the total gaseous fuel used for operation is injected in a highly compressed state into the prechamber.

## Revendications

1. Moteur à combustion interne à compression de mélange et autoallumage pour du carburant gazeux, qui comporte une préchambre (4) séparée d'une chambre de combustion principale (7) à laquelle elle est reliée par au moins une ouverture (6), la chambre principale (7) étant elle-même reliée à une conduite de gaz combustible à basse pression tandis que la préchambre (4) est reliée à une conduite de gaz combustible à haute pression, le mélange carburant/air étant insufflé à partir de la préchambre (4) dans la chambre principale (7) pour y enflammer un mélange gaz/air sous pression,
**caractérisé en ce que**
la préchambre (4) est formée dans une pièce rapportée qui peut être montée sur la culasse (5) et dans laquelle est disposé un injecteur (10) raccordé à la conduite de gaz combustible à haute pression et à travers lequel ce gaz peut être insufflé dans la préchambre (4), et au moins une ouverture d'insufflation (6) relie la préchambre (4) et la chambre de combustion principale (7).

2. Moteur à combustion interne à compression de mélange avec autoallumage selon la revendication 1,
**caractérisé en ce que**
l'injecteur (10) est un injecteur à téton sur lequel, au moins dans la zone délimitant la préchambre (4), est monté un bouclier de protection (9) constitué d'une douille ou d'une rondelle en un matériau conducteur de la chaleur, du cuivre par exemple.

3. Moteur à combustion interne à compression de mélange avec autoallumage selon la revendication 1 ou 2,
**caractérisé en ce que**
dans la pièce rapportée (1) est prévue une bougie (2) pénétrant dans la préchambre et entourée au moins partiellement par un écran (3) résistant aux températures élevées.

4. Moteur à combustion interne à compression de mélange avec autoallumage selon une des revendications précédentes,
**caractérisé en ce que**
l'injecteur à téton (10) est équipé d'un système hydraulique commandé par une électrovanne et qui permet de choisir librement le début et la durée d'ouverture, avec dans ce système une pression stationnaire supérieure à la pression d'insufflation du gaz combustible, et une huile hydraulique dont la viscosité est accordée au jeu du téton dans son guidage de manière que le siège de ce téton est lubrifié et qu'ainsi aucune ou au plus une quantité négligeable d'huile participe à la combustion.

5. Moteur à combustion interne à compression de mélange avec autoallumage selon une des revendications précédentes,
**caractérisé en ce que**
le rapport du volume de la préchambre (4) et de la section totale des orifices de soufflage (6) est compris entre 50 et 80 cm³/cm².

6. Procédé pour faire fonctionner un moteur à combustion interne, notamment selon une des revendications précédentes, au moyen d'un carburant gazeux introduit dans une préchambre où il forme un mélange riche carburant/ air tandis que dans une chambre de combustion est aspiré un mélange carburant/air, le carburant gazeux qui est insufflé dans la préchambre l'étant sous une pression qui dépasse la pression finale de compression dans la chambre principale,
**caractérisé en ce que**
moins de 0,5 % de tout le carburant gazeux utilisé pour l'entraînement du moteur est insufflé à haute pression dans la préchambre.
